Europäisches Patentamt

European Patent Office

Office européen des brevets

(11) Publication number: **0 206 651**
**A2**

## EUROPEAN PATENT APPLICATION

(21) Application number: **86304490.5**

(22) Date of filing: **12.06.86**

(51) Int. Cl.⁴: **G02B 7/18 , H01S 3/086**

(30) Priority: **17.06.85 GB 8515320**

(43) Date of publication of application:
**30.12.86 Bulletin 86/52**

(84) Designated Contracting States:
**DE FR IT**

(71) Applicant: **UNITED KINGDOM ATOMIC ENERGY AUTHORITY**
**11 Charles II Street**
**London SW1Y 4QP(GB)**

(72) Inventor: **Rutt, Harvey Nicholas**
**22 Galleyfield Abingdon**
**Oxon(GB)**

(74) Representative: **Wood, Paul Austin**
**Patents Branch United Kingdom Atomic Energy Authority 11 Charles II Street London SW1Y 4QP(GB)**

(54) **Adjustable mirror mountings.**

(57) An adjustable mirror mounting comprising a rigid base member, a holder for a mirror and at least one adjuster acting between the base member and the mirror holder, each adjuster consisting of a deformable sealed chamber having an entry port in it by means of which the interior of the chamber can be pressurised from a source of variable fluid pressure thereby to deform the chamber, and means for connecting the adjusters to the base member and the mirror holder.

EP 0 206 651 A2

## Adjustable Mirror Mountings

The present invention relates to adjustable mirror mountings and in particular to such mountings for mirrors for use in the formation of optical cavities for lasers.

Laser oscillators include at least one mirror as part of an optical cavity within which the lasing action takes place. The adjustment of these mirrors is critical, particularly when it is desired to generate high powers, of the order of kilowatts, continuously for industrial use. Existing designs of adjustable mirror mounts use screw threads as the adjusting means. However, even with the finest threads which are readily available, these are not satisfactory.

According to the present invention there is provided an adjustable mirror mounting comprising a rigid base member forming a first reaction member, a holder for a mirror forming a second reaction member and at least one adjuster acting between the base member and the mirror holder, each adjuster consisting of a deformable sealed chamber having an entry port in it by means of which the interior of the chamber can be pressurised from a source of variable fluid pressure thereby to deform the chamber, and means for connecting the adjuster to the base member and the mirror holder.

The invention will now be described by way of example with reference to the accompanying drawings, in which Figure 1 is a sectional view of a part of a mirror mounting embodying the invention, Figure 2 is a sectional view of part of a second embodiment of the invention, and Figure 3 is a sectional view of a part of a third embodiment of the invention.

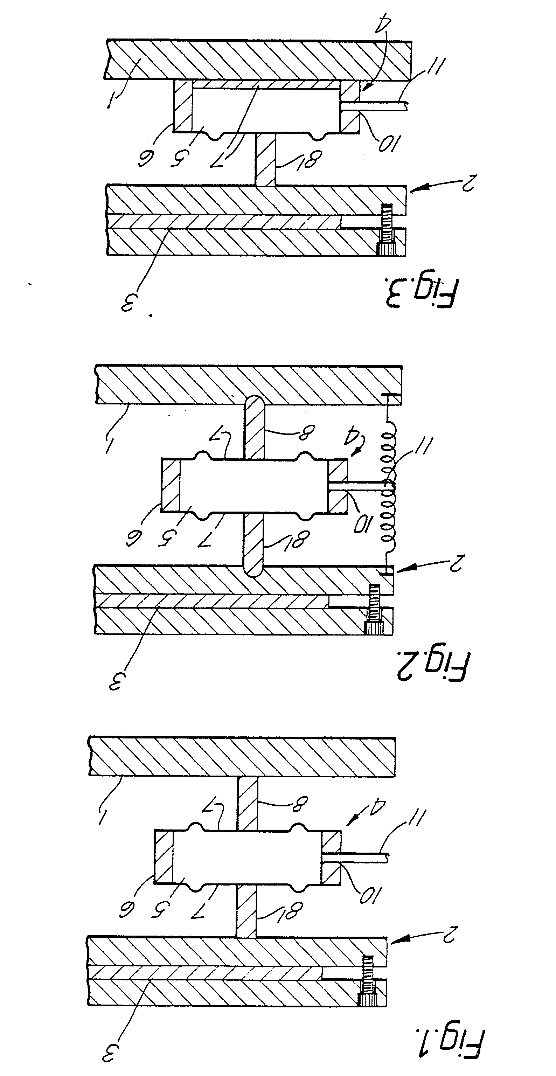

Referring to Figure 1 of the drawings, an adjustable mirror mounting comprises a rigid base member 1, and a mirror holder 2 in which a mirror 3 is clamped. Between the base member 1 and the mirror holder 2 are three adjusters 4, only one of which is shown. The adjusters 4 are disposed regularly about a circle, of a diameter appropriate to that of the mirror holder 2. Each of the adjusters 4 consists of a sealed cylindrical chamber 5 having a rigid side wall 6 and corrugated flexible end walls 7. To the centre of each end wall 7 there is attached an actuating rod 8, 8' respectively. The actuating rod 8 bears upon the base member 1 and the actuating rod 8' bears against the mirror holder 2, which thus form reaction members. A port 10 in the side wall 6 of the chamber 5 enables the chamber 5 to be pressurised from a source of fluid pressure (not shown) via a pipe 11. The fluid may be either liquid or a gas, but preferably the latter. By varying the pressure within the chamber 5, the end walls 7 are caused to deflect and thereby move the mirror holder 2 in relation to the base member 1. The response of the adjusters 4 to a given change in pressure appropriate to a particular mirror can be arrived at by a suitable choice of material and thickness for the end walls 7 of the chambers 5.

The actuating rods 8 and 8' may be firmly attached to their respective reaction members 1 and 2 so that they can act in a push/pull fashion, or they may have pointed or rounded ends which locate in recesses in their respective reaction members 1 and 2, and a pre-load placed on them by means of tension springs 21 acting between the mirror holder 2 and the base member 1, as shown in Figure 2.

In a simpler form of adjuster, (shown in Figure 3 of the drawings) only one end wall 7 of the chamber 5 is flexible and equipped with an actuating rod 8, the other end wall 7 being rigid and adapted to bear directly against the base member 1. As before the remaining actuating rod 8 may be rigidly attached to the mirror holder 2 or bear loosely against it and be maintained in position by a tension spring acting between the loose member 1 and the mirror holder 2.

Alternatively, the end walls 7 can be made to be rigid and the side wall 6 of the chamber 5 may be made to be extendible.

### Claims

1. An adjustable mirror mounting comprising a rigid base member forming a first reaction member, a holder for a mirror forming a second reaction member and at least one adjuster acting between the base member and the mirror holder, each adjuster consisting of a deformable sealed chamber having an entry port in it by means of which the interior of the chamber can be pressurised from a source of variable fluid pressure thereby to deform the chamber, and means for connecting the adjuster to the base member and the mirror holder.

2. A mirror mounting according to claim 1 wherein the chamber has two opposed deformable end walls each of which is connected to a respective reaction member by an actuating rod.

3. A mirror mounting according to claim 1 wherein the chamber has a rigid end wall bearing directly upon one reaction member and a deformable end wall connected to the other reaction member by an actuating rod.

4. A mirror mounting according to claim 2 or claim 3 wherein each actuating rod bears loosely against its respective reaction member and is maintained in contact therewith by a plurality of tension springs acting between the reaction members.

5. A mirror mounting according to any preceding claims wherein there is included three chambers disposed regularly about a circle centred on and conforming to the mirror holder.

6. A mirror mounting substantially as hereinbefore described with reference to the accompanying drawings.

Fig.1.

Fig.2.

Fig.3.